# FASCICULE DE BREVET EUROPEEN

(11) **EP 1 251 792 B1**
(45) Date de publication et mention de la délivrance du brevet: **15.06.2005**
(21) Numéro de dépôt: 01904032.8
(22) Date de dépôt: 02.02.2001
(51) Int. Cl.: A61C 3/16

(54) **CLEF DE DESCELLEMENT**
KRONENHEBER
DEVICE FOR EXTRACTING A DENTAL APPLIANCE

(30) Priorité: 03.02.2000 FR 0001381; 27.03.2000 FR 0003833
(43) Date de publication de la demande: 30.10.2002
(73) Titulaire: Muller, Alexandre, 13100 Aix-en-Provence (FR); Muller, William, 13090 Aix-en-Provence (FR)
(72) Inventeur: Muller, Alexandre, 13100 Aix-en-Provence (FR); Muller, William, 13090 Aix-en-Provence (FR)
(74) Mandataire: Marek, Pierre
(86) Numéro de dépôt international: PCT/FR2001/000315
(87) Numéro de publication internationale: WO 2001/056495

(56) Documents cités:
- EP-A- 0 399 237
- WO-A-99/39651
- WO-A-99/44530
- DE-A- 3 621 055
- DE-A- 3 733 634
- US-A- 4 594 069

## Description

La présente invention concerne un instrument servant à déposer les couronnes dentaires unitaires, supports de bridges et autre prothèse scellée sur une dent naturelle ou sur un implant, en facilitant ainsi grandement le travail des chirurgiens dentistes et des stomatologues pratiquant ces interventions.

On connaît une technique de descellement des couronnes dentaires suivant laquelle on pratique une entaille horizontale de longueur réduite dans la face vestibulaire de la couronne et on introduit, à travers cette entaille, la partie travaillante d'un instrument à levier entre les faces occlusales du moignon et de l'intrados de la couronne, de manière à desceller et à soulever cette dernière par une rotation de l'instrument. Un avantage de cette méthode est qu'elle est rapide et facile à appliquer et qu'elle permet de récupérer la couronne lorsque l'intervention sur la dent est terminée.

Le document EP-A-399 237 décrit un instrument à levier de ce genre pour la mise en oeuvre de cette technique. Cet instrument comprend un manche et une pièce travaillante d'extrémité reliée audit manche par une partie de prolongement de faible section. La pièce travaillante d'extrémité de cet instrument est constituée par une plaquette plate rectangulaire. Pour effectuer la dépose d'une couronne, on introduit la partie travaillante plate de l'instrument, à travers l'entaille pratiquée préalablement dans la face vestibulaire de la couronne, entre la face occlusale du moignon et l'intrados de la couronne, et on applique un mouvement de rotation à l'instrument permettant d'exercer un couple de forces entre le moignon et la couronne entraînant le descellement et le soulèvement de cette dernière.

Cet instrument a pour inconvénient majeur de générer un mouvement de bascule de la couronne par rapport à l'axe du moignon, du fait de la mise en action de formes plates générant un mouvement de poussée désaxé par rapport à l'axe vertical de la dent ; ces mouvements désaxés, outre le fait qu'ils ne favorisent pas le décollement de la couronne, peuvent être préjudiciables à la dent ou à l'implant, suivant le cas, voire également à la prothèse, la moindre tension pouvant en effet provoquer l'éclatement de la céramique si la prothèse est réalisée dans ce matériau. D'autre part, il génère des points de blocage et des frictions sollicitant la partie intermédiaire et fragilisant de ce fait l'instrument.

L'invention a notamment pour but de solutionner le problème dont découle l'inconvénient susmentionné.

Selon l'invention, ce problème est résolu grâce à l'instrument décrit dans la revendication 1, lequel est principalement remarquable par le fait que sa partie travaillante possède une section ellipsoïdale, ovale ou en forme d'escargot, cette forme particulière permettant d'obtenir un couple de forces régulier, supprimant pratiquement tout effort latéral, du fait que l'effort de décollement et de soulèvement s'opère dans un axe qui se confond totalement ou presque avec l'axe vertical de la dent.

Les buts, caractéristiques et avantages ci-dessus et d'autres encore, ressortiront mieux de la description qui suit et des dessins annexés dans lesquels:
La figure 1 est une vue de face d'un exemple de conformation de l'instrument de dépose de couronnes dentaires selon l'invention.
La figure 2 est une vue, à plus grande échelle et en coupe transversale selon la ligne 2-2 de la figure 1, d'un mode de réalisation préféré de la partie travaillante de l'instrument.
La figure 3 est une vue de face d'un embout d'instrument exécuté suivant un autre exemple de conformation sensiblement identique de l'instrument.
La figure 4 est une vue de côté de cet embout.
La figure 5 est une vue en coupe transversale d'une variante de réalisation de la partie travaillante de l'instrument.
La figure 6 représente la section de la partie intermédiaire échancrée de l'instrument.
Les figures 7 et 8 sont des vues, respectivement de face et de côté, illustrant une première variante de conformation de l'instrument.
Les figures 9 et 10 sont des vues, respectivement de face et de côté, représentant une deuxième variante de conformation de l'instrument.
La figure 11 est une vue en coupe verticale montrant le descellement d'une couronne à l'aide de l'instrument selon l'invention.
La figure 12 est une vue en coupe analogue considérée selon le plan sagittal.

On se reporte auxdits dessins pour décrire des exemples de réalisation avantageux, bien que nullement limitatifs, de l'instrument de dépose de prothèse dentaire, selon l'invention.

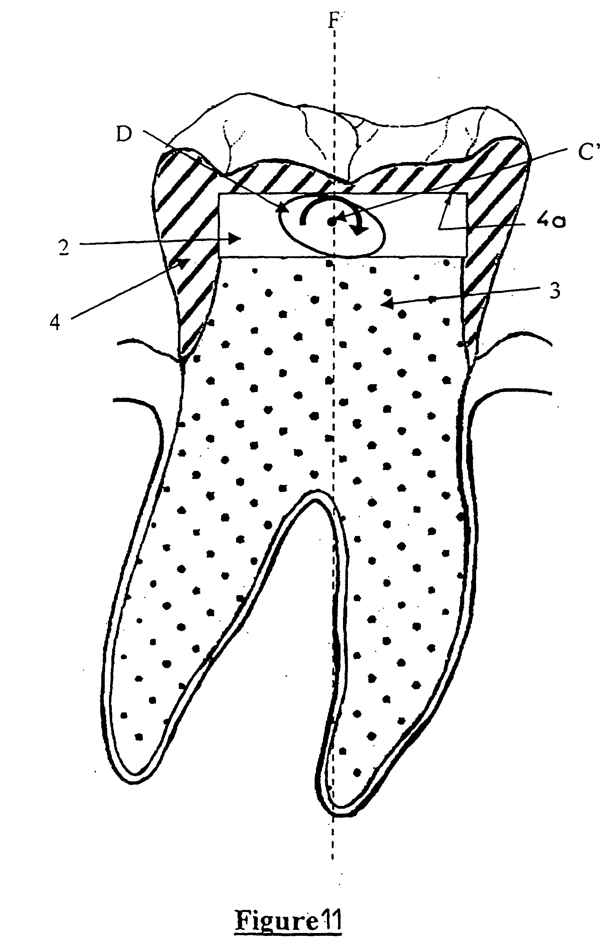

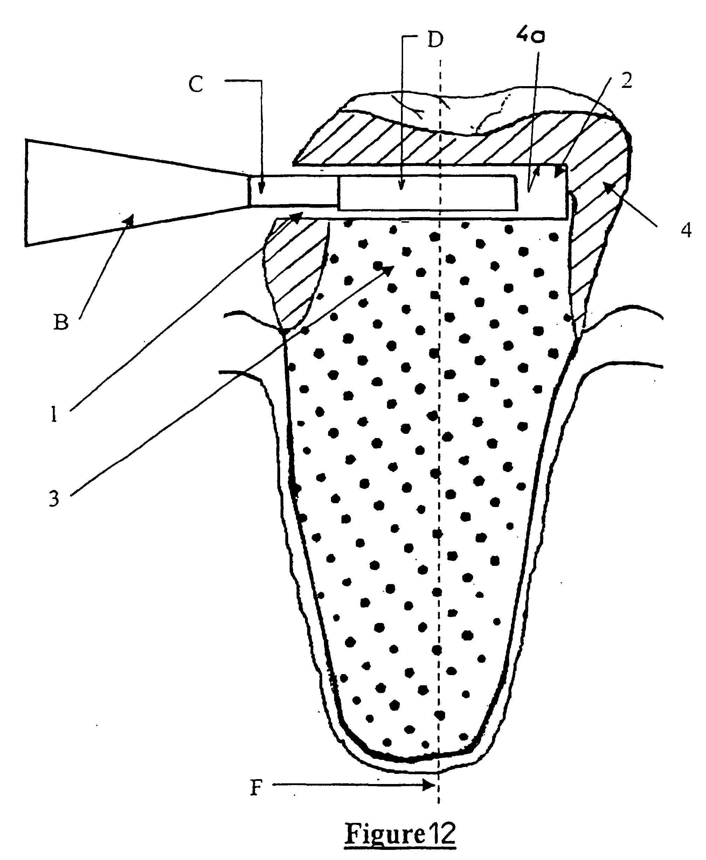

Compte tenu du fait que, dans la pratique, une dent ou un implant dentaire ne sont que rarement verticaux au sens strict du terme, on prendra pour référence en terme de verticalité, l'axe vertical théorique F de la dent ou de l'implant tel qu'il est représenté sur les figures 11 et 12, pour la clarté de l'exposé qui suit.

L'ensemble des figures des dessins et des modes de réalisation et d'utilisation, sont décrits à partir d'une prothèse scellée sur un moignon 3 naturel, ou reconstitué. Néanmoins, la présente invention assure la même fonction dans le cas où le moignon 3 est prothétique, en particulier dans le domaine de l'implantologie. On désigne, par convention, comme étant le moignon 3 prothétique, le système prothétique qui s'adapte sur l'implant, et sur lequel est fixée la couronne 4.

Selon les exemples illustrés, l'instrument de descellement par rotation suivant l'invention se décompose en quatre parties :
- un manche A ;
- une section intermédiaire effilée B ;
- une partie intermédiaire échancrée C ;
- une partie travaillante D.

Le manche A de l'instrument possède une forme ergonomique adaptée à la prise en main ainsi qu'à la mise en rotation dudit instrument, comparable au manche d'un syndesmotome.

La seule fonction de la section intermédiaire effilée B de l'instrument est de passer de la section du manche A à une section voisine de ou égale à celle de la partie intermédiaire échancrée C. Ses formes et dimensions peuvent donc être diverses.

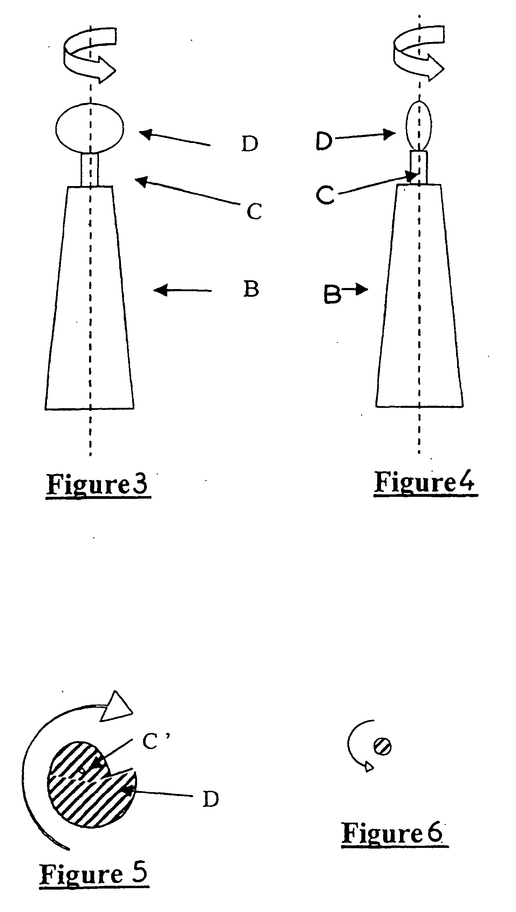

La partie intermédiaire échancrée C de l'instrument se présente sous la forme d'un segment possédant une forme de préférence cylindrique (figure 6). Son diamètre est fonction des dimensions de l'entaille 1 réalisée dans la face vestibulaire de la couronne 4. Sa longueur est fonction de l'épaisseur de la couronne 4 et de la profondeur de la rainure 2 aménagée entre la face occlusale du moignon et l'intrados de la couronne, pour permettre le décollement et la dépose de celle-ci.

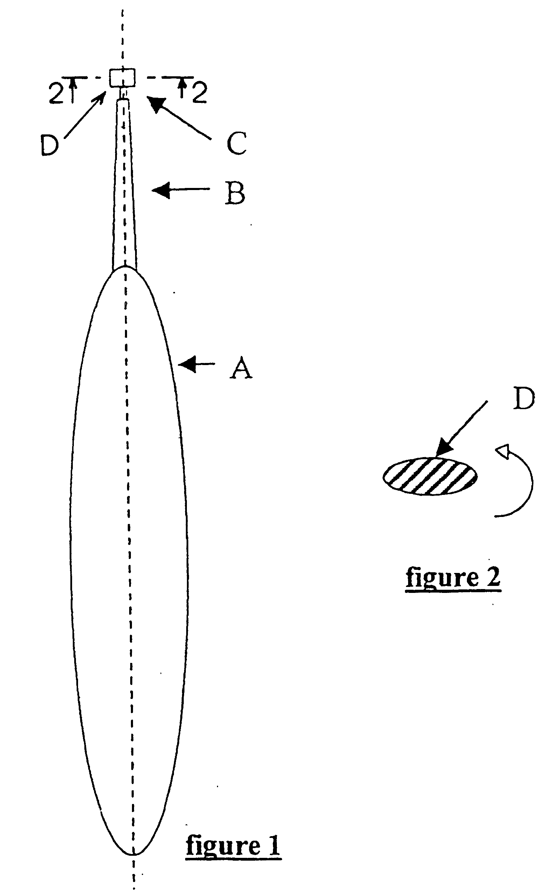

La partie travaillante D de l'instrument est caractérisée par le fait qu'elle présente une section ellipsoïdale (figures 2 et 11), ou ovale, ou en forme d'escargot (figure 5). Ceci implique que la distance entre les extrémités latérales de la partie travaillante D soit supérieure à la hauteur de la rainure 2.

L'instrument pourra nécessiter une adaptation à la diversité des situations rencontrées (dimension et position plus ou moins accessible de la dent à traiter). Cette adaptation pourra se manifester par une modulation dans l'alignement ou le désalignement de ses différentes parties A, B, C, D, ou dans les formes et dimensions de ces dernières. Aussi, l'instrument peut avantageusement se présenter sous la forme d'un jeu d'embouts interchangeables intégrant une ou plusieurs parties, B, C, D de l'instrument, suivant l'emplacement qui sera choisi pour réaliser le système d'assemblage des parties séparables.

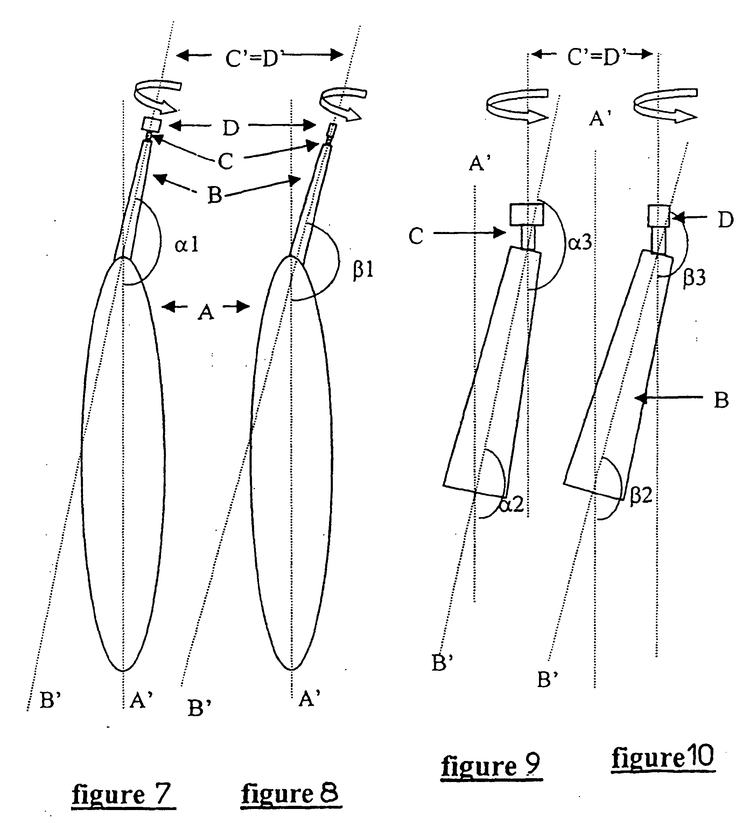

Les axes A', B', C' et D' des différentes parties A, B, C, D de l'instrument peuvent être alignés ou former des angles entre eux, de sorte que toutes les parties de l'instrument peuvent être soit sur un même axe (figure 1), soit sur des axes différents, pour une manipulation plus aisée en bouche, par exemple, pour accéder à des dents postérieures (figures 7, 8, 9 et 10).

Les figures 3 et 4 représentent une variante d'embout de l'instrument possédant une partie travaillante D dont la face (figure 2), le profil (figure 3) et la section sont ellipsoïdales.

La figure 5 représente une variante de la conformation de la partie travaillante de l'instrument dont la section est en forme d'escargot. Cette forme présente l'intérêt d'obtenir un couple de forces régulier, sensiblement vertical et très proche de l'axe vertical F de la dent.

La figure 6 représente la section d'une partie intermédiaire échancrée C de forme cylindrique d'un instrument de descellement par rotation.

Les figures 7 et 8 représentent une variante de conformation de l'instrument dont les axes A' du manche A et B' de la section intermédiaire effilée B forment, respectivement, des angles α1 de face et β1 de profil,

Les figures 9 et 10 représentent une autre variante de configuration de l'instrument dont les axes A' du manche A et B' de la section intermédiaire effilée B forment, respectivement, des angles α2 de face et β2 de profil, et dont les axes B' et C' de la partie intermédiaire échancrée C forment des angles α3 de face et β3 de profil.

Les dimensions respectives de la partie intermédiaire échancrée C et de la partie travaillante D sont variables en fonction des situations rencontrées, selon qu'il s'agit d'une couronne classique ou d'une couronne sur implant ou selon les dimensions de la couronne ou sa position en bouche. A titre d'exemple non limitatif, la partie intermédiaire échancrée C, telle que représentée sur les figures 3 et 4 peut se présenter sous la forme d'un cylindre d'environ 4 mm à 5 mm de longueur et présentant une section de 1 mm à 1,6 mm et la partie travaillante D peut avoir une section ellipsoïdale.

Les figures 10 et 11 illustrent le descellement d'une couronne à l'aide de l'instrument selon l'invention.

L'utilisation de l'instrument nécessite, dans un premier temps, la création d'une entaille 1 traversant l'épaisseur de la couronne 4 sur sa face la plus accessible (en général, la face vestibulaire). Cette entaille 1 doit être d'une largeur supérieure ou égale au diamètre de la partie intermédiaire échancrée C. Cette entaille 1 doit être créée sur un plan sensiblement parallèle à la surface occlusale de la couronne 4, au niveau supposé de la partie occlusale du moignon 3.

Dans un deuxième temps, on prolonge cette entaille 1 à l'aide d'une fraise (du type fissure cylindrique) pour créer une rainure 2 en effectuant un balayage partiel ou total de la surface du moignon 3. Cette rainure 2 doit posséder des dimensions permettant l'introduction totale de la partie travaillante D.

Il convient, dans un troisième temps, de glisser la partie travaillante D de l'instrument dans la rainure 2 ainsi créée, jusqu'à faire coïncider la partie intermédiaire échancrée C avec l'entaille 1 de la couronne 4.

On communique, enfin, par l'intermédiaire du manche A, un mouvement de rotation à la partie travaillante D générant un couple de forces dans l'axe de la dent (ou de l'implant), entre la face occlusale du moignon 3, d'une part, et l'intrados 4a de la couronne 4, d'autre part, entraînant le descellement et la dépose de ladite couronne. Jusqu'au descellement de la couronne 4, les formes et dimensions de la partie intermédiaire échancrée C permettent à celle-ci de ne pas faire obstacle au soulèvement de la paroi latérale entaillée de la couronne 4, et de ne pas exercer d'efforts latéraux sur celle-ci.

Ainsi, une utilisation appropriée de l'instrument permet d'obtenir un descellement de la couronne 4 sans engendrer des forces latérales, lesquelles sont inefficaces, douloureuses et dangereuses pour la sauvegarde du moignon 3 de la dent ou de l'implant.

Par ailleurs, selon ce procédé, on incise la couronne 4 sur un plan sensiblement parallèle à la surface occlusale de cette dernière, ce qui permet de ne pas détruire ladite couronne 4. En effet, l'entaille 1 pratiquée dans la couronne 4 conserve à celle-ci sa rigidité et n'altère pas son sertissage cervical, ce qui permet de la récupérer pour une éventuelle repose. Il suffira alors, après repose de la couronne 4 de procéder à l'obturation de l'entaille 1 avec des matériaux appropriés.

## Revendications

1. Instrument servant à déposer une couronne dentaire (4) comportant une partie intermédiaire échancrée (C) faisant suite à un manche (A), une section intermédiaire effilée (B) reliant ledit manche et ladite partie intermédiaire échancrée, et une partie travaillante (D) destinée à s'insérer dans une rainure (2) préalablement effectuée par le praticien au niveau supposé de la face occlusale d'un moignon (3) naturel ou prothétique, selon un plan sensiblement parallèle à la surface occlusale de la couronne (4), ladite partie travaillante (D) étant agencée pour permettre, par une action physique, d'exercer un couple de forces sensiblement dans l'axe vertical (F) de la dent ou de l'implant, entre la face occlusale du moignon (3), d'une part, et l'intrados de la couronne (4), d'autre part, les formes et dimensions de la partie intermédiaire échancrée (C) étant déterminées de façon à limiter les efforts latéraux sur la couronne (4) en ne faisant pas obstacle à la translation verticale de la paroi entaillée de ladite couronne, l'instrument étant agencé de sorte que la partie intermédiaire échancrée (C) et la partie travaillante (D) entrent solidairement en rotation avec la section intermédiaire effilée (B) et le manche (A) par action du praticien sur le manche, **caractérisé en ce que** la partie travaillante (D) possède une section ellipsoïdale, ovale, ou en forme d'escargot.

2. Instrument selon la revendication 1, **caractérisé en ce que** les différentes parties qui le composent, à savoir : la partie travaillante (D), la partie intermédiaire échancrée (C), la section intermédiaire effilée (B) et le manche (A), sont alignés sur un même axe.

3. Instrument selon la revendication 1, **caractérisé en ce que** certaines des parties qui le composent, à savoir : la partie travaillante (D), la partie intermédiaire échancrée (C), la section intermédiaire effilée (B) et le manche (A) sont sur des axes formant des angles entre eux de façon à faciliter la manipulation et l'accès à certaines parties buccales.

4. Instrument suivant la revendication 3, **caractérisé en ce que** l'ensemble constitué par la partie travaillante (D), la partie intermédiaire échancrée (C) et la section intermédiaire effilée (B) forme un angle (α1) avec le manche (A).

## Patentansprüche

1. Instrument, das dazu dient, eine Zahnkrone (4) zu entfernen, wobei dieses Instrument besteht aus einem ausgeschnittenen Zwischenteil (C), das sich anschließt an einen Griff (A), einen zugespitzten Zwischenabschnitt (B), der den genannten Griff und den genannten ausgeschnittenen Zwischenteil miteinander verbindet, und einem arbeitenden Teil (D), der dazu dient, sich in eine Rille (2) einzufügen, die vorher von dem praktizierenden Arzt auf dem angenommenen Niveau der okklusalen Seite eines natürlichen oder prothetischen Stumpfes (3) realisiert wurde, und dies gemäß einer fast parallelen Ebene zur okklusalen Oberfläche von der Krone (4), wobei der genannte arbeitende Teil (D) derart angeordnet ist, um es anhand einer physikalischen Aktion zu erlauben, ein Kräftepaar etwa in der vertikalen Achse (F) vom Zahn oder vom Implantat auszuüben, zwischen der okklusalen Seite des Stumpfes (3), einerseits, und der Innenseite von der Krone (4), andererseits, wobei die Formen und Dimensionen vom ausgeschnittenen Zwischenteil (C) derart bestimmt sind, dass sie die Seitenbeanspruchungen an der Krone (4) begrenzen ohne die vertikale Translation von der eingeschnittenen Wand von der genannten Krone zu verhindern, wobei das Instrument derart angeordnet ist, dass der ausgeschnittene Zwischenteil (C) und der arbeitende Teil (D) gemeinsam zu drehen beginnen mit dem zugespitzten Zwischenabschnitt (B) und dem Griff (A) über die vom praktizierenden Arzt ausgeübte Aktion auf den Griff, **dadurch gekennzeichnet, dass** der arbeitende Teil (D) einen ellipsoidalen, ovalen oder schneckenförmigen Abschnitt aufweist.

2. Instrument nach Anspruch 1, **dadurch gekennzeichnet, dass** die verschiedenen Teile, aus denen es sich zusammensetzt, das heißt: der arbeitende Teil (D), der ausgeschnittene Zwischenteil (C), der zugespitzte Zwischenabschnitt (B) und der Griff (A), auf einer selben Achse ausgerichtet sind.

3. Instrument nach Anspruch 1, **dadurch gekennzeichnet, dass** einige von den Teilen, aus denen es sich zusammensetzt, das heißt: der arbeitende Teil (D), der ausgeschnittene Zwischenteil (C), der zugespitzte Zwischenabschnitt (B) und der Griff (A), auf Achsen liegen, die Winkel untereinander bilden, um die Manipulierung und den Zugang zu einigen bukkalen Teilen erleichtern.

4. Instrument nach Anspruch 3, **dadurch gekennzeichnet, dass** die Einheit, die sich aus dem arbeitenden Teil (D), dem ausgeschnittenen Zwischenteil (C), dem zugespitzten Zwischenabschnitt (B) zusammensetzt, einen Winkel (α1) mit dem Griff (A) bildet.

## Claims

1. Instrument used to remove a dental crown (4) comprising a recessed intermediate part (C) at the end of a handle (A), a tapered intermediate section (B) connecting the said handle and the said recessed intermediate part, and a working part (D) that will be inserted in a groove (2) previously made by the practitioner at the assumed level of the occlusal face of a natural or prosthetic stump (3) in a plane approximately parallel to the occlusal surface of the crown (4), the said working part (D) being arranged to apply a physical action to create a pair of forces approximately along the vertical axis (F) of the tooth or the implant between firstly the occlusal face of the stump (3) and secondly the intrados of the crown (4), the shapes and dimensions of the recessed intermediate part (C) being determined so as limit lateral forces on the crown (4) without forming an obstacle to vertical translation of the notched wall of the said crown, the instrument being arranged such that the recessed intermediate part (C ) and the working part (D) are fixed in rotation with the tapered intermediate section (B) and the handle (A) by the practitioner taking action on the handle, **characterised in that** the section of the working part (D) has an ellipsoidal, oval or snail-shaped.

2. Instrument according to claim 1, characterised ion that the different component parts, namely the working part (D), the recessed intermediate part (C), the tapered intermediate section (B) and the handle (A) are aligned on the same axis.

3. Instrument according to claim 1, **characterised in that** some of the instrument component parts, namely the working part (D), the recessed intermediate part (C), the tapered intermediate section (B) and the handle (A) are on axes forming angles between them so as to facilitate manipulation and access to some parts of the mouth.

4. Instrument according to claim 3, **characterised in that** the assembly formed by the working part (D), the recessed intermediate part (C) and the tapered intermediate section (B) form an angle (α1) with the handle (A).
